# EUROPEAN PATENT SPECIFICATION

(11) **EP 1 550 306 B1**
(45) Date of publication and mention of the grant of the patent: **14.02.2007**
(21) Application number: 03798737.7
(22) Date of filing: 24.09.2003
(51) Int. Cl.: H04N 7/08, H04N 7/16

(54) **CABLE TELEVISION SYSTEM AND METHOD FOR COMPATIBLE BANDWIDTH UPGRADE USING EMBEDDED DIGITAL CHANNELS**
KABELFERNSEHSYSTEM UND VERFAHREN ZUR KOMPATIBLEN BANDBREITENAUFRUESTUNG UNTER VERWENDUNG EINGEBETTETER DIGITALER KANAELE
SYSTEME DE TELEVISION PAR CABLE ET PROCEDE DE MISE A JOUR DE LA LARGEUR DE BANDE COMPATIBLE AU MOYEN DE CANAUX NUMERIQUES ENCASTRES

(30) Priority: 25.09.2002 US 255799
(43) Date of publication of application: 06.07.2005
(73) Proprietor: Dotcast, Inc., Kent, WA 98032 (US)
(72) Inventor: HOARTY, Leo, W., Morgan Hill, CA 95037 (US); CICIORA, Walter, S., Southport, CT 06490-1027 (US); HARTSON, Ted, E., Scottsdale, AZ 85260 (US)
(74) Representative: Weston, Robert Dale
(86) International application number: PCT/US2003/030327
(87) International publication number: WO 2004/030359

(56) References cited:
- EP-A- 0 308 241
- EP-A- 0 577 351
- WO-A-02/07425
- WO-A-99/55087
- US-A1- 2002 056 140

## Description

### TECHNICAL FIELD

The invention relates to cable television delivery systems for providing television programming and other broadband content to consumer homes. More particularly, this invention relates to systems and methods for increasing the capacity of such systems to carry additional standard television programming, personalized on-demand programming, or other information by embedding digital signals as an underlay to the channels on the system's analog tier in such a way that the simultaneously transmitted analog programming is not interfered with. The digital signals are then decoded at or near the consumers' homes and re-modulated onto residual bandwidth available on the existing cable system for final distribution to the consumer's existing cable modem or set-top box and television receiver.

### BACKGROUND

Cable television (at times also called community antenna television or CATV) was developed in the late 1940's to serve rural communities unable to receive TV signals because of terrain or distance from TV stations. Cable television system operators set up antennas in areas with good reception, picked up commercial broadcast station signals, and then distributed them by coaxial cable to subscribers for a fee. In 1950, cable systems operated in only 70 communities in the United States. These systems served 14,000 homes. By 2001, there were systems in roughly 32,000 communities serving about 80 million subscribers. Cable systems are operating in every state of the United States and in many other countries, including Austria, Canada, Belgium, Germany, Great Britain, Italy, Japan, Mexico, Spain, Sweden and Switzerland.

The number of channels of programming that a cable system can carry is dependant on the type of headend equipment utilized and the electronic properties of the system's cabling, amplifiers, taps, and other components. Channel capacity in the industry has increased dramatically in recent years; a few systems now offer in excess of 100 channels. However, most cable systems in the US are technically capable of offering between 36 and 60 channels meaning that they operate at between 330 and 450 MHz.

A large channel capacity on a television cable system makes it possible for a system operator to provide many services. In addition to television broadcast signals that may be available from off-air, most systems now also offer diverse program services available only to cable subscribers including special entertainment features, news, sports, weather, business information, and many movies. They also offer so-called "niche" programming designed for specific audiences such as children, women, and various ethnic and racial groups. Some cable operators also create their own local programming and provide access channels for public and institutional uses. They also provide leased access channels for "rent" to those wishing to show specific programs. Electronic banking, shopping, utility meter reading, and home security are some of the home services that are possible using the two-way transmission capabilities of some cable television systems.

Meanwhile, consumers continue to desire additional speed and richness in the nature and quality of the content they receive. With the proliferation of personal computers in the 1990's, easy-to-use graphical interfaces now facilitate users to select and watch MPEG and other streaming content, listen to MP3 files of music, conduct telephone conversations over The Internet (sometimes accompanied by video) and process and store digital images in JPEG or other formats. Because the richness of this content overwhelms the capacity of the typical dial-up phone modem, consumers have been migrating to so-called "broadband" connections. However the telephone infrastructure does not support such "Digital Subscriber Line" services in all areas and many cable operators have begun to offer a full-range of telecommunications services, including high-speed Internet access and local telephone service. High-speed Internet access allows subscribers to connect to The Internet using a cable modem at speeds as much as 100 times faster than the standard analog phone- based modem.

The market demand for this expanding body of programming and rich media coupled with competitive pressure from companies distributing extensive selections of movies and programming by means of satellite, results in cable operators facing strong pressure to increase the bandwidth of their existing systems. However to do so requires investing in expensive new cable headend equipment and pulling new, more expensive cable down each street. This new cable must then be equipped with new distribution amplifiers and other electronics which may even have to spaced differently than with lower bandwidth systems.

What cable operators need is a technology that enables them to increase the number of channels of programming and other forms of broadband services that they can deliver without a complete infrastructure rebuild. To address this unmet need, embodiments of the present invention add the needed additional digitalized programming as an embedded underlay to the existing analog programming. This is accomplished by exploiting the fact that the analog television signal is based on a system designed over a half century ago that does not use the maximum information capacity of the standard 6 MHz that each channel occupies of the television spectrum (both over the air and on cable systems) and thus there is an opportunity to add more information to it without degrading its ability to still carry the television programming it was intended to carry and without changing the physical cable infrastructure needed to carry it.

This new programming is then extracted at or near the home with relatively inexpensive equipment and remodulated onto frequencies above the highest frequency in use by the cable operator on that system. These new "private channels" or signals are then transmitted over the home's existing cabling to a cable modem or decoded and displayed on the television by the consumer's existing set top receiver. This is possible because of the relatively short distance the higher frequency signals need to travel in the home and the fact that most cable modems and set-top receivers are standardized to operate in nearly all cable systems and can handle frequencies well above the 450 MHz or less that is carried by more typical cable systems.

### PRIOR ART

Document WO-A-9955087 [Encamera assigned Dotcast] discloses "A system for transmitting digital programming includes a program source providing digital information, circuitry for modulating the digital information onto a visual carrier modulated with analog television programming, and a visual transmitter coupled to the modulating circuitry. Using a phase modulation method, the system phase modulates the digital information onto a visual carrier, reduces the baseband frequencies of the phase modulated visual carrier, and amplitude modulates the phase-modulated video carrier onto a video signal. The amplified and encoded video signal are combined with an amplified sound signal and transmitted. Using an additive method, the system modulates the sidebands of the video carrier with the digital information and amplitude modulates the video signal onto the video carrier. The data-modulated sidebands are phase-shifted such that they will be in quadrature with the amplitude-modulated video signal. The system combines the amplitude-modulated video carrier and the data-modulated quadrature sidebands. With a blended multiplicative/additive method, the system provides phase modulation and quadrature sideband addition to provide an optimized result."[Abstract]

### SUMMARY OF INVENTION

Apparatus for providing programming to a user's monitor comprising:-
a. a decoder adapted to extract digital information imposed on the carrier of a television signal in a first cable system television channel;
b. a modulator adapted to modulate the extracted digital information onto a second cable system television channel as programming; and
c. control circuitry coupled to the decoder and adapted to receive signals from a control device operated by the user and to determine which cable system television channel carries said programming as designated by the user on the control device and, accordingly, which cable system television channel constitutes the first cable system television channel,
   wherein
d. the control circuitry is adapted to determine an un-used frequency either located in an un-used cable channel or just above the last used cable channel for use as the second cable system television channel.
Document WO-A-9955087 does not disclose either "first and second cable system channel user selection" or the "determination of an un-used frequency" features of the present invention.

According to an embodiment of the present invention; apparatus comprises:
a. a source for programming (102a) feeding a headend controller;
b. a source for supplying the television signal to a headend processor in said first television channel delivered by a cable system;
c. a headend combiner to impose the programming as digital information on the carrier of said television signal of the first television channel;
d. a cable television infrastructure operatively connected to the headend controller and the headend processor and adapted to transport the television signal containing the programming to a plurality of decoder devices adapted to extract the digital information imposed on said carrier;
f. a modulator to modulate the extracted digital information onto a second cable system television channel as programming; and,
g. control circuitry coupled to the decoder and adapted to receive signals from a control device operated by the user
Also according to the present invention, a process for providing programming to a user's monitor comprises:-
a. extracting digital information imposed on the carrier of a television signal in a first cable system television channel;
b. modulating said extracted digital information onto a second cable system television channel as programming, the second channel available for supplying said programming to said monitor; and
c. receiving a signal from a user;
   wherein
d. upon receipt of a signal corresponding to a user's designation of said programming, determining:-
   (i) which cable system television channel carries said programming and accordingly which cable system television channel constitutes the first cable system television channel, and
   (ii) locating an un-used frequency in an un-used cable channel or just above the last used cable channel, for use as the second cable system television channel.

Various embodiments of the present invention provide apparatus, methods, and systems for effectuating a bandwidth increase in a manner compatible with most common cable television systems. The invention will achieve this object by embedding one or more data carriers within one or more analog television channels at the system headend. The preferred embodiment would use the dNTSC or dPAL approach described in the referenced associated filings in which the data is injected modulated substantially in quadrature to the visual or video carrier, thus rendering it theoretically "invisible" to typical consumer grade television receivers.

The system then employs a device that decodes one or more of the channels in which the data has been embedded channels. This device can be located either in the cable subscriber's home or in a neighborhood node serving a plurality of homes. In either case, the extracted data are remodulated onto one or more local "private channels" (typically 64 or 256 QAM) and then up-converted to unused frequencies that are typically located in unused channels or just above the last used cable channel. For instance, if the cable system delivered 78 television channels on channels 2 through 79 (at 52 to 550 MHz and whether analog or digital), various embodiments of the current invention would recover the embedded data signal and remodulate that signal (with or without additional embedded signals) onto channel 80 at 556 MHz, or higher. Although there is an upper limit to the frequency that may be carried by both the coaxial cabling within a home as well as the for the cable set-top box, various embodiments of the current invention could operate within these limits since a coaxial cable or other wiring system designed to operate to 550 MHz (by way of example only) but can operate successfully at higher frequencies for the relatively short distances in the home. Also, for economies of scale, digital cable set-top boxes and cable modems are often designed to operate up to at least 860 MHz, regardless of the bandwidth of the system employing them which, if less that 860 MHz, simply does not exploit the full capacity of the set-top terminal.

The "private channels" are re-modulated into digital carriers compatible with the commercial digital cable set-top boxes such as devices available from Scientific Atlanta or Motorola. The contents of the "private channels" would then be decoded and outputted to a standard television receive device in a manner consistent with a cable industry standard digital carrier hence requiring no special decoder for viewing contents of the virtual channels.

This technique of modulating signals at frequencies unused within the cable operator's band or at frequencies above the highest frequency used by the cable operator to create local, "private channels" (sometimes called "virtual" or "pseudo" channels) is known in the art. A different application is taught as an element of several patents authored by one of the present inventors (Hoarty) and another variant is in the public domain and is used by some custom video installers to distribute DVD, Audio, and security camera video content from a central location to other locations within homes.

Additionally one or more of the "private channels" could be re-modulated in a manner compatible with the cable television standard DOCSIS (Digital Over Cable Service Interface) in order to be demodulated by a commercially available broadband cable modem.

The purpose of the translation to standard cable digital carriers (64 or 256 QAM) is to eliminate the need for a custom digital set-top box or custom cable modem in the user's home. This is accomplished by the virtual channel translator device which can be placed in a node on the cable system central to a neighborhood served or in the cable termination point on the customer premises or even in behind the television set and before the cable set-top box. This approach also allows for multiple cable set-tops or cable modems within one house to have access to these new, locally created, "private channels" and the programming or other content they carry.
In yet another embodiment, the "private channels" could be extracted from their embedded analog carrier and decoded in a proprietary set-top box or proprietary cable modem. Though, this approach is not usually favored by the cable television operator. The approach, above, of decoding and translation to a standard digital modulation format provides a transparent upgrade to an existing cable television operation.
Other than the additional encoding equipment that must be installed at the cable system headend, the only material cost to the cable operator is the additional decoding equipment that would need to added to the local neighborhood node or in various alternative embodiments and the requirement of a "truck roll" to have a technician install a decoder box in the user's home. However, it is possible in various embodiments of the invention to have a customer self-install a decoding device in the home by simply connecting the decoder/translator in series with the existing cable set-top box though whole house usage would be restricted.
It is also possible to build the needed decoder means into existing commercial cable set-top boxes and commercial cable modems, though the process of migrating such new devices into an existing cable TV plant is slower sue to a number of logistical issues.
The translation process can be made economic by the fact that in various embodiments the digital data embedded by the proprietary process at the headend can be encoded with Forward Error Correction (FEC) already compatible with a commercial digital set-top box. Such FEC schemes are typically a Reed-Solomon error correction with an appropriate data block interleaving. The decoding-translating device need only detect then demodulate the embedded data signal then re-modulate the data signal to the scheme compatible with the particular cable TV system, again, that would be typically 64 or 256 QAM. FEC processing would not then be necessary in the detector translator device.
It is anticipated that various embodiments of the present invention will use dNTSC or dPAL (as described in more detail in the referenced related applications) as the means to insert digital data into the television signal transmitted on the cable system.

However, it will be obvious to those skilled in the art that any system or technology which can embed a compatible digital signal of sufficient data rate in a television signal will function as well as part of various embodiments of either the system or method of the present invention.

It is an object of various embodiments of the present invention to enable cable operators to significantly increase the effective bandwidth that certain cable television systems can deliver to the subscriber's television set or computer without investing in a complete rebuild of the physical cable plant.

This and other features and advantages of various embodiments of the present invention will become clear to those skilled in the art upon review of the following description, the attached drawings and appended claims.

### BRIEF DESCRIPTION OF THE DRAWINGS

Figure 1 is a high-level overview diagram of the entire system showing various embodiments of the invention as they might be deployed on a cable system.
Figure 2 is a more detailed diagram of the Headend elements
Figure 2a is a more detailed diagram of the "Virtual Personal Video Recorder" features enabled by certain embodiments of the invention
Figure 3 is a diagram of the embodiment utilizing an embedded carrier to physical carrier processor with multiplexer
Figure 4 is a diagram of the embodiment utilizing embedded carrier to physical carrier, with direct translation
Figure 5 is a diagram showing an embodiment using a digital Set-top
Figure 6 is a diagram of the way various embodiments of the present invention use the spectrum of a cable system.

### DETAILED DESCRIPTION OF INVENTION

Various embodiments of the present invention provide apparatus, methods and systems for significantly increasing the effective bandwidth of a typical cable television system without requiring a complete system re-build involving new cabling, amplifiers and other major capital upgrades to the cable plant infrastructure. Briefly stated, embodiments of the present invention provide apparatus and methods by which the cable television system operator can add additional programming by inserting digital data into the regular television programming being broadcast on the analog tier in such a way that there is no perceptual interference with the sound or appearance of that programming when it is received at any subscriber's home and displayed on a typical consumer grade television set.

That inserted digital data is then transmitted along with the television programming using the existing cable system infrastructure and then extracted at or near the cable subscriber's home. The data is then remodulated on frequencies not otherwise in use by that cable operator for transmission to and throughout the home and its reception on the existing industry standard set-top box or cable modem and the movies, music, web pages or other programming is played or displayed in industry standard fashion.

### Overview

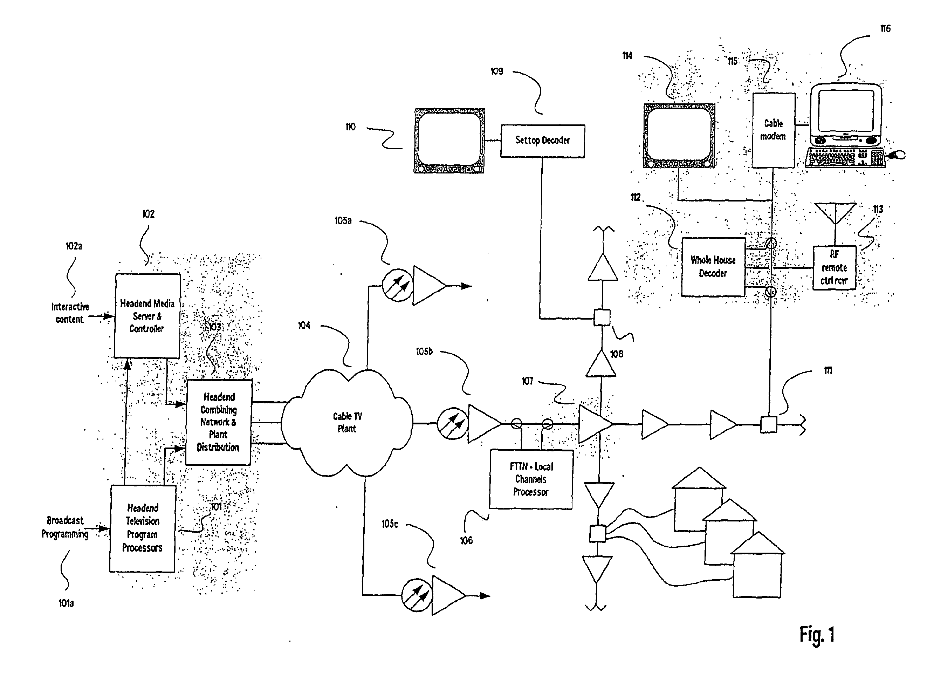

A high-level overview of a preferred embodiment of the invention is shown in Figure 1. This diagram shows the headend of a cable television system, the cable system, the subscriber's home and the various points at which the data may be extracted and remodulated according to various embodiments. Embodiments of the present invention are capable of delivering digital content of any type including full-length feature films, video games, news and sports, and computer data files. In some embodiments, content can be obtained on-demand by the consumer while in others the content may be viewed in real time as it is broadcast or streamed from the provider.

Various embodiments will also support Personal Video Recorder (PVR) like programming where a consumer can view a TV program on a cable channel in real time as it is broadcast but have the option of pausing the program and resuming it later at some arbitrary time according to the consumer's choice. While all viewers watch the same cable television channel when viewing the same scheduled television program, this "pause and resume" function requires that a separate "private" television channel be provided to the cable subscriber at the point at which that viewer activates said pause function.

To provide such a mix of broadcast and viewer-controlled programming requires that a considerable number of independent, television-bandwidth channels be provided. For example, if ten percent of a cable television audience were to utilize the on-demand features of the system (including in this example, the PVR-like "pause and resume" function), then a typical, median-size cable television system that served 50,000 subscribers would require 5,000 private television channels. This requirement is not practically met by any existing cable television system architecture. Meeting the practical and technical requirements of offering such band-width intensive enhanced services without necessitating an economically impractical complete rebuild of the cable plant is one of the objects of certain embodiments of the present invention.

A detailed review of Figure 1 reveals two types of content entering the network at the headend. The first is the existing television programming 101a which is processed by the existing cable television headend processors. This content typically arrives by direct terrestrial link or off-air antennas from nearby television broadcast facilities in the case of local programming and via satellite in the case of the cable-only channels such as CNN, MTV, HBO, etc. The second type of content 102a is intended for interactive services and typically arrives via an Internet connection, satellite, DVD or other digital distribution media.

The interactive content 102a is provided on-demand by 102 in which local data storage is maintained. On-demand content is metered by 102 and encoded for transmission. The encoded, on-demand content is embedded within a given NTSC (or PAL) television carrier using a proprietary process known at dNTSC. The embedding process occurs either on frequency or at Intermediate Frequency also known in the Art as "IF". Some or all of the analog television channels of 101 are pass through 102 where the embedding process is performed. Broadcast channels and interactive content embedded in broadcast channels are combined in 103 and, if needed, up-converted to their assigned television channels. These combined channels are then modulated as a block onto trunk lines leaving the headend. These trunk lines (105a, 105b, and 105c) are typically optical but traditional coaxial cable would still be sufficient to support the present invention. Furthermore, with multiple trunk lines leaving the headend to carry cable service into individual service neighborhoods, certain embodiments of the present invention can take advantage of this distribution and exploit space division multiplex by placing unique sets of interactive channels on each truck leaving the headend effectively multiplying the private channel capacity of the system.

In this example, the optical trunk signal is converted to electrical at a neighborhood optical-bridge amplifier 105b. Directly following the optical receiver is one embodiment of the invention, 106, which provides embedded channel extraction and processing for the respective neighborhood of subscribers. These embedded channels either decoded and remodulated or directly converter to the appropriate frequency to address the one or more viewers requesting the service. The new channels are placed on channels unused by the cable system. The unused channels are typically higher than the last cable channel used by the non-interactive portion of the cable plant. As the median cable TV system in the United States offers 60 channels and uses 450 MHz in bandwidth and as most TV tuner sub-systems for cable TV-compatible TV sets and VCRs can tune to 860 MHz, there remains a suitable gap of residual bandwidth (up to 410 MHz worth) in which to place the newly generated interactive (private) channels.

There are three methods of exploiting the embedded information claimed by this invention, they are: to extract the embedded information and remodulate said information by 106 onto new, unused frequencies at a neighborhood cable TV node 105b and then have these newly generated channels distribute throughout a neighborhood of subscribers served by said node. This process is repeated on a neighborhood-by-neighborhood basis thus reusing the same block of newly generated frequencies in a manner known to the art as space division multiplexing. This is one of the most economic embodiments of the invention but is also the most limited in private channel generation. Another method places a device 112 called a "whole house decoder" is similar to 106 and is placed on or within the premises of the subscriber and in a manner similar to 106 generates private television channels for distribution within the home for use by any television set or computer (in the case of offering high-speed cable modem service). The device 112 is typically located in a service entrance to a home such as a garage or basement or service pedestal located on the property. The method greatly increases the private channel carrying capability of the invention but is more costly as it requires one "whole house decoder" per subscriber that desires the interactive services. The "whole house decoder" can provide multiple channels of service outputting private channels of entertainment or Internet access on frequencies within the capability of the household coaxial wiring but above the highest available channel of the cable television system. As with the neighborhood node embodiment 105b the whole house decoder 112 extracts private content for the house served from within the primary broadcast channels using the dNTSC embedded data system. The third method is to place the embedded signal decoding within a cable set-top box which serves just one television set and perhaps has an Ethernet jack on the back panel to provide high-speed Internet access using an embedded channel as a downstream conduit (this presumes a DOCSIS compatible return path is included in the set-top.) This third embodiment is the least economic but provides the maximum amount of capacity for serving interactive subscribers.

To understand the private channel concept, once generated and inserted in the channel group at the headend, the private channels are extracted and then distributed by 106 at the newly generated frequencies through-out the "fiber service area" served by the neighborhood node. For example, the viewer at TV set 110 has requested a video-on-demand (VOD) movie. That TV set has been assigned a private (virtual) channel generated by the video-on-demand server at the headend through the appropriate purchasing and allocation mechanism. The private channel leaves the VOD server and is encoded by the present invention at 102. The encoded program is carried as an embedded signal within one or part of one broadcast TV channel in the main, non-interactive group of TV channels on a particular trunk line serving the neighborhood of the requesting viewer. For example, assume the cable system offers the median number of program channels of 60. This private, embedded VOD channel is then extracted by a device of the invention, 106, and remodulated and up-converted to channel 61 to be tuned and descrambled by set-top decoder 109 and viewed on TV set 110. Only the requesting viewer's set-top box will descramble and display the program on the TV set attached to said set-top though the system could also support multiple televisions enabled to view the same private channel.

### On-Demand Programming

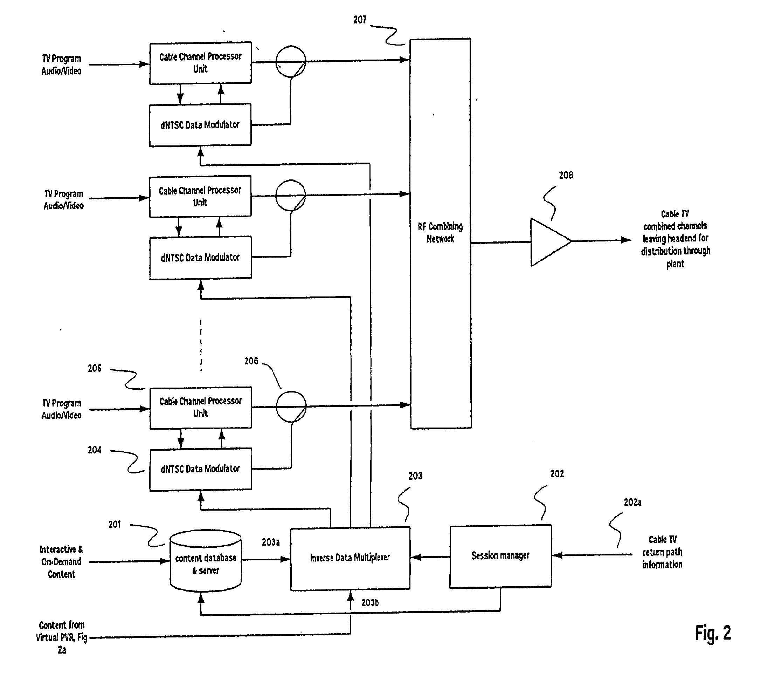

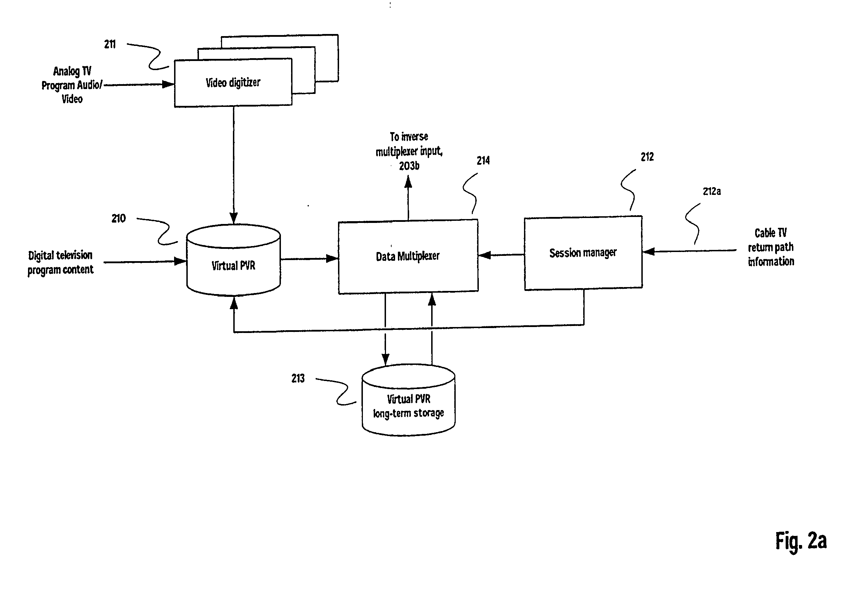

In addition to the typical cable TV processing occurring at the cable television system headend, Figure 2 shows how certain preferred embodiments of the invention add a means 201 for receiving and storing various types of interactive audio and video content including video-on-demand content. Said content can be received by any practical means including satellite link, Internet access or magnetic tape among many other means as is known in the Art. A session manager device 202 responds to requests from users of the system via the cable television plant's return path information 202a. This information carries the unique identification of a user as well as a request from the user via the cable set-top box in the user's home.

The requests can be to order service (purchase a video-on-demand movie, for instance) as well as to control a program currently being viewed. An example of controlling a program would be to fast-forward or rewind a currently playing movie. Another example of control provided by the session manager would be as a means to pause a live television broadcast and allow the viewer to resume from any arbitrary point at which the live program was paused. This is accomplished by storing digital television content received via satellite or other means, or digitized in real-time from a live analog broadcast, in a video database storage device which stores for later retrieval any arbitrary program content and allows playback from any point within the program. Figure 2a will describe this function in more detail.

All content sources available as private program channels to the viewer are in some form of digitized video or audio or both. The session manager 202 instructs the inverse multiplexer 203 to route private channel programming from either the on-demand database 203a or the virtual PVR sub-system 203b to a designated dNTSC encoder to travel as a virtual channel to the requesting user's set-top for decoding and viewing. Alternately, the same private programming could be routed to an existing transport multiplexer in the headend to be mixed with existing broadcast digital channels to be further distributed to the requesting user for decoding on that user's cable set-top decoder.

In the case of the dNTSC embedded carrier acting as the private channel path to the user, the private channel requested by the user leaves inverse multiplexer 203 and is modulated into a data sub carrier by dNTSC encoders 204 and added to an analog television signal in such a manner as to not disturb the picture or sound of the host channel as described in the previously referenced patent 6,433,835. Once inserted into the analog signal, the analog signal with its added data subcarrier is combined with the other program channels of the cable system using ordinary means known to the art by combining network 207. The output of said combining network is a broadband signal. Said output can range from a bandwidth of 330 MHz to a currently practical limit of one GHz. The average U.S. cable system supports about sixty television channels (450 MHz).

Output processor 208 will either be a power amplifier to drive one or more coaxial trunk cables or an optical modulator to transmit the broadband content via fiber optic cable to each neighborhood served.

The novelty of the invention is best understood as a means to combine broadcast television programming content with on-demand (private channel) content in a manner that is technically feasible and economically practical.

Figure 2a illustrates a particular embodiment wherein a centralized recording means is located at a cable television headend to support the "virtual private video recording" function that is enabled by certain embodiments of the present invention. This function enables a cable television subscriber to cause a broadcast television program to be temporarily stored for later viewing on a recording device located therein.

A certain number of live television programming choices are first selected for processing by the particular embodiment of the invention illustrated based on a desired service offering by the cable operator. For example, the cable company could decide that all major broadcast networks and most popular cable TV channels (HBO, CNN, MTV, etc) would be offered as part of a tier of programming that the subscriber could "pause and resume" through utilizing the additional functionality provided by various embodiments of this invention. This content that is then sent out of the cable plant to digital set-top boxes in subscribers homes' is also made available to the virtual PVR 210 for storage. The local network broadcast programming is sometimes acquired off-air in an analog format and at other times by direct feed from the broadcast studio. When any content is received in an analog format, it is converted to digital video by video digitizer 211 prior to storage on 210. The virtual PVR 210 records using a sliding time window method where the each program is maintained for a period of time determined by the service provider. In typical embodiments, the most recent eight to ten hours of broadcast program content on each channel would be kept available.

The illustrated embodiment of the invention receives command from a viewer through cable TV return path information 212a. If the command were to pause a live television program, the set-top connected to the viewer's television set would transmit back to the headend the program channel currently being viewed by the subscriber. Assuming that said program channel was one among the channels offered by the cable operator for said pause and resume feature, the session manager 212 would attempt to find a free private channel path from the headend to the subscriber's set-top using a channel management subsystem. Assuming an available private channel, the session manager would send back a command to the respective subscriber's set-top box on a common signaling channel monitored by all set-top boxes using said service. The subscriber's set-top box would be instructed to tune to a particular television channel and to decode the dNTSC embedded carrier. The decoded carrier would be decompressed from a compressed digital video signal into a program signal compatible with the subscriber's television set. Hence, the subscriber's set-top would leave the broadcast channel and be assigned a private television channel with the same program but now running through a large virtual PVR located at the headend which the subscriber could manipulate with a remote control in the home as if the device were local.

At the headend, the session manager 212 would address the virtual PVR database, 210, for the specific point in time that the user requested to pause the program. The single frame of video would be presented to the user through the private television channel provisioned as described above. When the subscriber desires to resume watching said paused program, the session manager will instruct the virtual PVR database to playback said program from said point of pause. The subscriber will now be viewing said program via a private TV channel at some point in time offset from the live program content. The system can allow any number of pause and resume requests as well as allow the subscriber to fast forward (to the point of the live program assuming the live program would still be in progress) or to rewind as fall back as the start of the program.

An additional novelty of the invention is to provide an additional program database 213 to provide long term storage of a favorite program or movie allowing recall and playback at a later time utilizing the private channel mechanism described above.

### Neighborhood Node

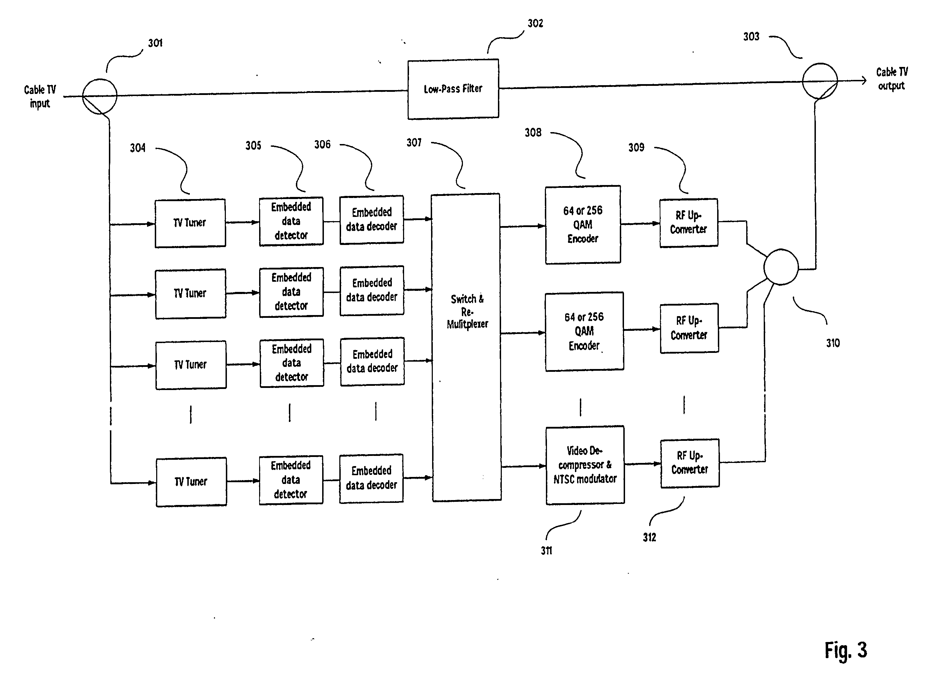

An embodiment using the embedded carrier processor is shown in Figure 3. This device is intended to be placed in an equipment pedestal or hung from a telephone pole at each point on a cable system where the fiber optic cable is terminated and the signal is converted to electrical or at such point where a main trunk line is tapped and distribution feeds are generated to serve specific neighborhoods.

The device depicted in this figure is placed in-line with a distribution cable of a cable television plant and serves part or all of a neighborhood served by a fiber optic cable or of a neighborhood served by a tap in a traditional trunk and feeder cable system (non-optical, all coaxial plant). The device extracts a signal through a directional coupler 301 then applies a low-pass filter 302 to remove electrical noise above the highest channel used by the cable system. The output of the low-pass filter is then passed through another directional coupler where locally generated program channels are added to the main cable television broadband channels group. These locally generated channels are typically generated on channels above the highest channel used by the cable system.

The locally-generated channels are created from signals embedded in the main cable television broadcast channels. This process involves utilizing a standard television tuner device 304 to tune to a television channel containing the desired embedded signal. The output of said tuner then feeds an embedded data detector 305 which detects the data subcarrier and feeds said subcarrier to embedded data decoder 306 which decodes the embedded data into a binary data transport stream. The demodulated data signal is then presented to a data multiplexer, 307, which either simply routes the stream to an available QAM encoder or combines a data stream with another data stream from another embedded carrier and then switches the combined stream to an available QAM encoder. Yet another path through the device would route a data stream of compressed video information to a video decompressor 311 which decompresses into analog video and modulated the video into an NTSC intermediate signal for up-conversion by 312 to an available frequency. This newly generated TV channel can then be viewed by any television or VCR without further processing, perhaps to be used as a barker or other advertising channel for on-demand services.

The resulting RF signals from the up-converters are then combined by combining network 310 and are then reintroduced into the cable television plant through directional coupler 303. Access to the private channels thus generated is realized through tuning existing digital cable TV set-top converters or cable modems to the newly generated private channels. The private channels generated by the invention serve subscribers to the service within a given neighborhood. Each neighborhood presents an opportunity to reuse the private channel frequencies on a neighborhood by neighborhood basis thereby the invention provides a significant number of private TV channels for interactive and on-demand services.

### Whole House Processor

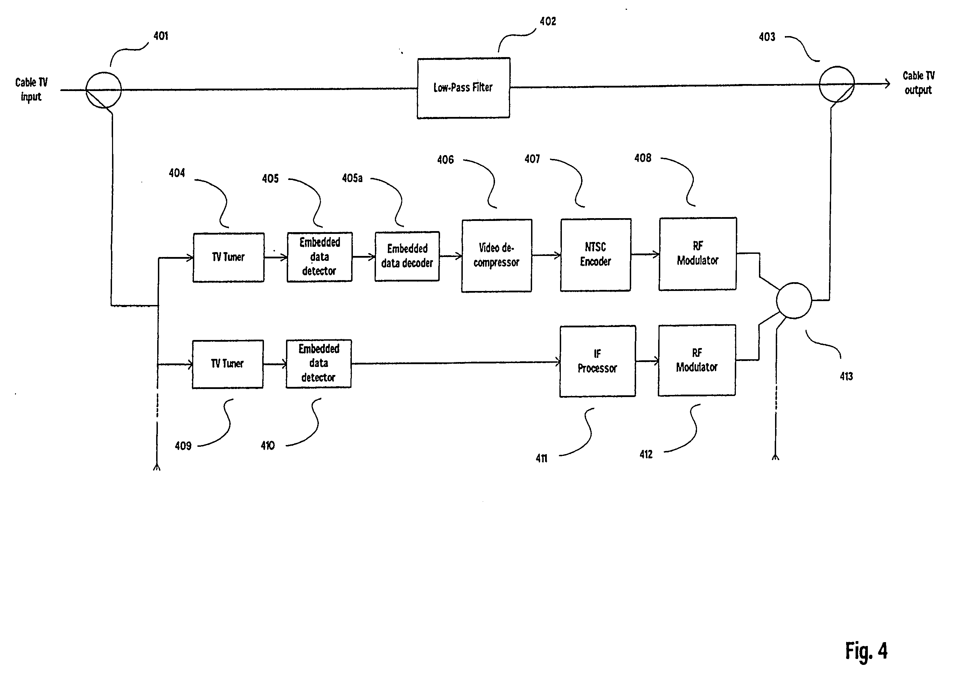

An embodiment representing a variation on the one shown in Figure 3 is shown in Figure 4. In this particular embodiment, the invention uses a single whole-house processor (see 112 in the overview diagram, Figure 1) to provide programming to a single subscriber and it would be typically located in or near the premises of the cable subscriber. Contrast this to the alternative embodiment detailed in Figure 3 where the processor is intended to serve a neighborhood of subscribers (see 107 in the overview diagram, Figure 1).

In this embodiment, tuner 404 tunes to the TV channel carrying the desired embedded signal. The embedded data detector 405 extracts the embedded data signal and presents said signal to video decompression device 406 which then decompresses video and presents a baseband video and audio signal to NTSC encoder 407 which produces a signal which is modulated onto an RF carrier and combined by 413 with other locally generated RF carriers within the whole house module and then added to the house cable distribution by directional coupler 403. Another path through the whole house module is depicted by tuner 409 and detector 410 producing an intermediate frequency signal which is then up-converted to a desired channel for output to the cable system avoiding a decoding and recoding step. This allows for a lower cost in home unit where all signaling is prepared and formatted in advance at the cable headend for direction conversion in the home.

Additionally, the embodiment of the invention used at the neighborhood node can also be employed for whole house use including the use of remultiplexing and switching. The whole house decoder allows any television set in the home to view on-demand or interactive content without requiring a set-top box. It also facilitates enhanced quality-of-service Internet access to computers located anywhere in the home where a cable system coaxial cable was available.

This embodiment of the invention provides private TV channels on a home by home basis thus generating proportionately more private TV channels on a given cable plant than the neighborhood node invention of Fig. 3 above. The invention as described herein can also apply to businesses within the service area of a particular cable system.

### Set-top Embodiment

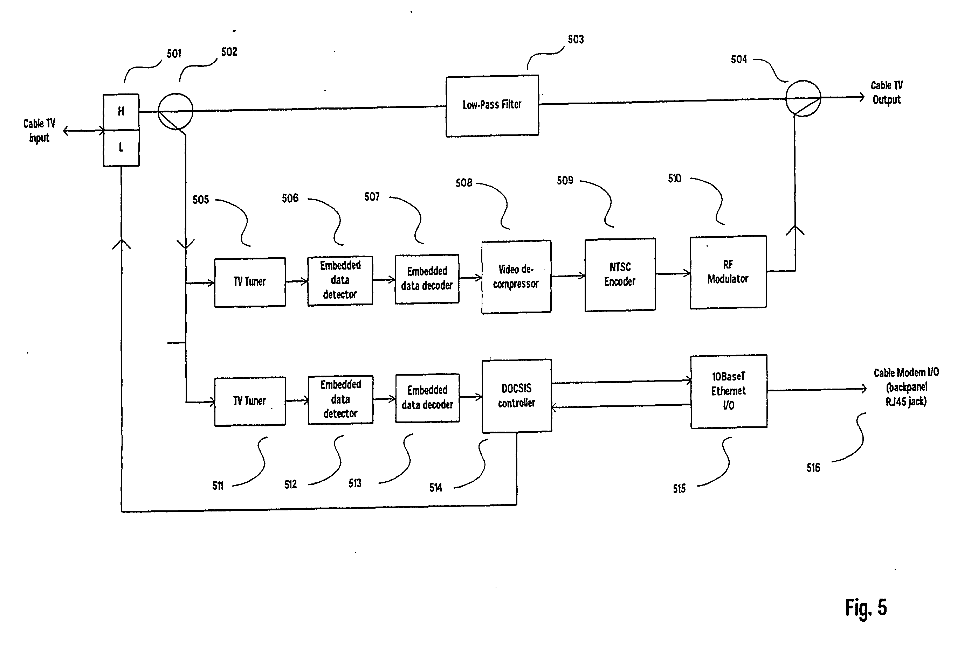

Figure 5 summarizes the components added to an existing cable set-top system to allow the set-top to individually decode embedded data streams without the use of a whole-house decoder or a neighborhood decoder. The drawing also illustrates DOCSIS compatible cable modem support. The path of the signal from the tuner (505 through 509) is the same as described above. The diplexer 501 accepts a return path signal from the DOCSIS cable modem controller 512 for transmission up stream to the cable system headend on the typical return path frequencies between 5 and 40 MHz.

### System Spectrum

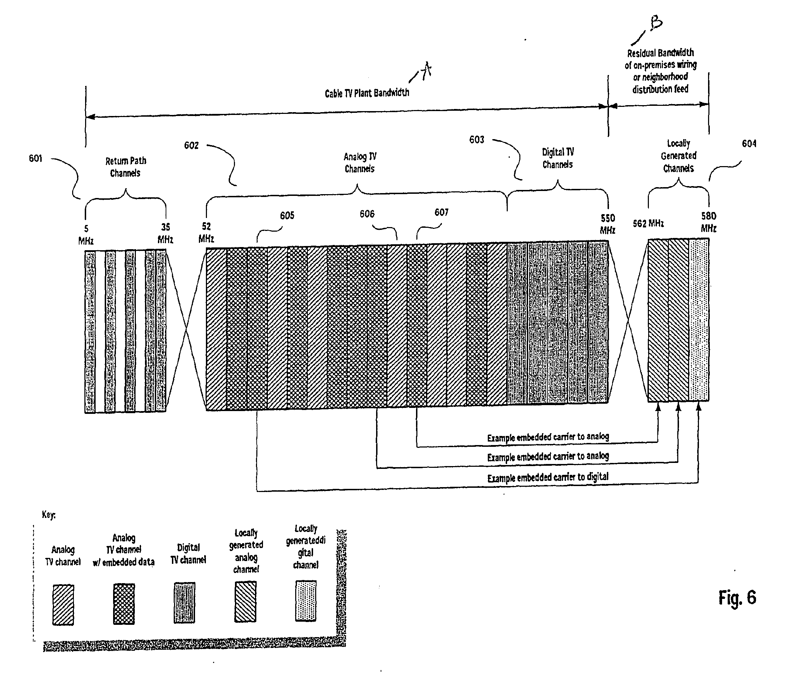

Figure 6 illustrates a typical configuration of a modem cable television system. From left to right, which represents low frequencies to high frequencies, a cable system uses the 5 MHz to 35 MHz band for the return path from the home back to the headend. From 52 MHz to the maximum channel capacity of a particular cable system (the median is 60 channels or 450 MHz), is a mix of analog (NTSC) and digital (64 or 256 QAM encoded digital transport stream). The lower channels from channel 2 to about 75% of the downstream capacity is reserved for analog (NTSC) channels. The remaining 25% is reserved for the digital tier. The current invention places the private, interactive channel above the last channel used by the cable plant for non-interactive, broadcast channels.

## Claims

1. Apparatus for providing programming to a user's monitor comprising:-
a. a decoder (106, 109, 112) adapted to extract digital information imposed on the carrier of a television signal in a first cable system television channel (101);
b. a modulator adapted to modulate the extracted digital information onto a second cable system television channel (102) as programming; and
c. control circuitry (201-206) coupled to the decoder and adapted to receive signals (202a, 212a) from a control device operated by the user and to determine which cable system television channel carries said programming as designated by the user on the control device and, accordingly, which cable system television channel constitutes the first cable system television channel,
**characterized in that:-**
d. the control circuitry (201-206) is adapted to determine an un-used frequency either located in an un-used cable channel or just above the last used cable channel for use as the second cable system television channel (102).

2. Apparatus according to claim 1, wherein the monitor is a television set (110, 114) or a computer monitor (116).

3. Apparatus according to claim 1 or claim 2, wherein the first cable system television channel (101) is analog or digital.

4. Apparatus according to any of claims 1 to 3, wherein the decoder and the remodulator (107, 111):-
a. form part of a neighborhood node (105); or
b. form part of a home network (112); or
c. form part of a set top box (115); or
d. are located at the cable system headend (103).

5. Apparatus according to any of claims 1 to 3, wherein the remodulator is adapted to feed a cable modem (115).

6. A process for providing programming to a user's monitor comprising:-
a. extracting digital information imposed on the carrier of a television signal in a first cable system television channel;
b. modulating said extracted digital information onto a second cable system television channel as programming, the second channel available for supplying said programming to said monitor; and
c. receiving a signal from a user;
**characterised in that:-**
d. upon receipt of a signal corresponding to a user's designation of said programming, determining:-
(i) which cable system television channel carries said programming and accordingly which cable system television channel constitutes the first cable system television channel, and
(ii) locating an un-used frequency in an un-used cable channel or just above the last used cable channel, for use as the second cable system television channel.

7. A process as claimed in claim 6 and wherein:-
a. the television signal comprises a signal relating to a visual signal and a visual carrier;
b. the signal containing the programming is modulated onto the visual carrier substantially in quadrature to the visual carrier,
c. the visual carrier onto which the programming has been modulated is fed onto a cable television infrastructure; and,
c. the television signal is transported to a plurality of devices which are adapted to extract the programming from the television signal.

8. A process as claimed in claim 6 or claim 7, wherein said received control signals cause storage of at least part of said programming and/or alteration of at least a part of said programming.

9. A process according to claim 8, wherein the step of modulating the signal containing the programming comprises modulating a signal containing programming that has been stored and/or altered according to control signals from the user device.

10. Apparatus as claimed in any of claims 1 to 5, comprising:
a. a source (102) for programming (102a) feeding a headend controller (102);
b. a source (101a) for supplying the television signal to a headend processor (101) in said first television channel (101) delivered by a cable system (104);
c. a headend combiner (103) to impose the programming as digital information on the carrier of said television signal of the first television channel;
d. a cable television infrastructure (104, 105) operatively connected to the headend controller and the headend processor and adapted to transport the television signal containing the programming to a plurality of decoder devices (106, 109, 112) adapted to extract the digital information imposed on said carrier;
f. a modulator to modulate the extracted digital information onto a second cable system television channel (102) as programming; and,
g. control circuitry (201-206) coupled to the decoder and adapted to receive signals (202a, 212a) from a control device operated by the user

11. Apparatus according to claim 10, wherein:-
a) wherein the television signal comprises a signal relating to a visual signal and a visual carrier; and,
b) the television signal containing the programming is substantially in quadrature to the visual carrier.

12. Apparatus according to claim 11, wherein the modulator is adapted to modulate the programming onto the visual carrier.

13. Apparatus according to any of claims 10 to 12, wherein the programming is interactive programming or television programming.

14. Apparatus according to any of claims 10 to 13, wherein the system is adapted to alter timing of delivery and display of and/or the content of said programming (102a).

15. Apparatus according to any of claims 10 to 14, wherein said alteration of delivery and display includes storage of at least a part of said programming (102a).

## Patentansprüche

1. Vorrichtung zum Bereitstellen einer Programmierung für einen Monitor eines Nutzers, welche aufweist:
a. einen Decoder (106, 109, 112), der dazu ausgebildet ist, digitale Information zu extrahieren, die einem Träger eines Fernsehsignals in einem ersten Kabelsystem-Fernsehkanal (101) aufgeprägt ist;
b. einen Modulator, der dazu ausgebildet ist, die extrahierte digitale Information auf einen zweiten Kabelsystem-Fernsehkanal (102) als Programmierung aufzumodulieren; und
c. eine Steuerschaltung (201-206), die an den Decoder gekoppelt und dazu ausgebildet ist, Signale (202a, 212a) von einem Steuergerät zu empfangen, welches durch den Benutzer bedient wird, und zu bestimmen, welcher Kabelsystem-Fernsehkanal die durch den Nutzer auf dem Steuergerät bestimmte Programmierung trägt und entsprechend, welcher Kabelsystem-Fernsehkanal den ersten Kabelsystem-Fernsehkanal bildet,
**dadurch gekennzeichnet, dass**
d. die Steuerschaltung (201-206) dazu ausgebildet ist, eine ungenutzte Frequenz zu bestimmen, die entweder in einem ungenutzten Kabelkanal oder unmittelbar oberhalb des letzten genutzten Kabelkanals liegt, zur Nutzung als zweiten Kabelsystem-Fernsehkanal (102).

2. Vorrichtung nach Anspruch 1, wobei der Monitor ein Fernsehgerät (110, 114) oder ein Computermonitor (116) ist.

3. Vorrichtung nach Anspruch 1 oder 2, wobei der erste Kabelsystem-Fernsehkanal (101) analog oder digital ist.

4. Vorrichtung nach einem der Ansprüche 1 bis 3, wobei der Decoder und der Remodulator (107, 111)
a. einen Teil eines Nachbarschafts-Knotens (105) bilden oder
b. einen Teil eines Heim-Netzes (112) bilden oder
c. einen Teil einer SetTop-Box (115) bilden oder
d. in einer Kabelsystem-Kopfstelle (103) gelegen sind.

5. Vorrichtung nach einem der Ansprüche 1 bis 3, wobei der Remodulator dazu ausgebildet ist, ein Kabelmodem (115) zu speisen.

6. Verfahren zur Bereitstellung einer Programmierung für einen Monitor eines Nutzers, welches aufweist:
a. das Extrahieren digitaler Information, die dem Träger eines Fernsehsignals in einem ersten Kabelsystem-Fernsehkanal aufgeprägt ist;
b. das Modulieren der extrahierten digitalen Information auf einen zweiten Kabelsystem-Fernsehkanal als Programmierung, wobei der zweite Kanal zum Bereitstellen der Programmierung an den Monitor verfügbar ist; und
c. das Empfangen eines Signals von einem Nutzer;
**dadurch gekennzeichnet, dass**
d. bei Empfang eines der Nutzer-Bestimmung der Programmierung korrespondierenden Signals ausgeführt wird,
(i) das Bestimmen, welcher Kabelsystem-Fernsehkanal die Programmierung trägt, und entsprechend, welcher Kabelsystem-Fernsehkanal den ersten Kabelsystem-Fernsehkanal bildet, und
(ii) das Finden einer ungenutzten Frequenz in einem ungenutzten Kabelkanal oder unmittelbar oberhalb des letzten benutzten Kabelkanals, zur Nutzung als zweiter Kabelsystem-Fernsehkanal.

7. Verfahren nach Anspruch 6, wobei
a. das Fernsehsignal ein Signal aufweist, das sich auf ein visuelles Signal bezieht, und einen visuellen Träger;
b. das die Programmierung enthaltende Signal auf den visuellen Träger im Wesentlichen in Quadratur des visuellen Trägers aufmoduliert wird;
c. der visuelle Träger, auf den die Programmierung aufmoduliert wurde, in eine Kabelfernseh-Infrastruktur eingespeist wird; und
c. das Fernsehsignal zu einer Mehrzahl von Geräten transportiert wird, welche dazu ausgebildet sind, die Programmierung aus dem Fernsehsignal zu extrahieren.

8. Verfahren nach Anspruch 6 oder Anspruch 7, wobei die empfangenen Steuersignale eine Speicherung mindestens eines Teils der Programmierung und/oder eine Änderung mindestens eines Teils der Programmierung bewirken.

9. Verfahren nach Anspruch 8, wobei der Schritt des Aufmodulierens des die Programmierung enthaltenden Signals das Modulieren eines Signals aufweist, welches die Programmierung enthält, welche entsprechend Steuersignalen vom Gerät des Nutzers gespeichert und/oder geändert wurde.

10. Vorrichtung nach einem der Ansprüche 1 bis 5, aufweisend:
a. eine Quelle (102) zur Programmierung (102a), die einen Kopfstellen-Controller (102) speist;
b. eine Quelle (101a) zur Bereitstellung des Fernsehsignals zu einem Kopfstellen-Prozessor (101) im ersten Fernsehkanal (101), welches durch ein Kabelsystem (104) geliefert wird;
c. einen Kopfstellen-Kombinierex (103) zum Aufprägen der Programmierung als digitale Information auf den Träger des Fernsehsignals des ersten Fernsehkanals;
d. eine Kabelfernseh-Infrastruktur (104, 105), die betriebsmäßig mit dem Kopfstellen-Controller und dem Kopfstellen-Prozessor verbunden und dazu ausgebildet ist, das die Programmierung enthaltende Fernsehsignal zu einer Mehrzahl von Decoder-Geräten (106, 109, 112) zu transportieren, die dazu ausgebildet sind, die auf den Träger aufgeprägte digitale Information zu extrahieren;
f. einen Modulator zum Modulieren der extrahierten digitalen Information auf einen zweiten Kabelsystem-Fernsehkanal (102) als Programmierung; und
g. eine Steuerschaltung (201-206) die mit dem Decoder verbunden und dazu ausgebildet ist, Signale (202a, 212a) von einem durch den Nutzer betätigten Steuergerät zu empfangen.

11. Vorrichtung nach Anspruch 10, wobei
a) das Fernsehsignal ein Signal aufweist, welches sich auf ein visuelles Signal bezieht, und einen visuellen Träger und
b) das die Programmierung enthaltende Fernsehsignal im Wesentlichen in Quadratur des visuellen Trägers besteht.

12. Vorrichtung nach Anspruch 11, wobei der Modulator dazu ausgebildet ist, die Programmierung auf den visuellen Träger aufzumodulieren.

13. Vorrichtung nach einem der Ansprüche 10 bis 12, wobei die Programmierung eine interaktive Programmierung oder eine Fernseh-Programmierung ist.

14. Vorrichtung nach einem der Ansprüche 10 bis 13, wobei das System dazu ausgebildet ist, den Zeitpunkt der Lieferung und Anzeige und/oder den Inhalt der Programmierung (102a) zu verändern.

15. Vorrichtung nach einem der Ansprüche 10 bis 14, wobei die Veränderung der Lieferung und Anzeige eine Speicherung mindestens eines Teils der Programmierung (102a) einschließt.

## Revendications

1. Appareil destiné à fournir la programmation à un moniteur d'utilisateur, comprenant :
a) un décodeur (106, 109, 112) conçu pour extraire des informations numériques superposées à la porteuse d'un signal de télévision sur un premier canal de télévision par câble (101) ;
b) un modulateur conçu pour moduler les informations numériques extraites sur un second canal de télévision par câble (102) sous la forme de programmation ; et
c) un agencement de circuits de commande (201 à 206), couplé au décodeur et conçu pour recevoir des signaux (202a, 212a) d'un dispositif de commande actionné par l'utilisateur et pour déterminer quel est le canal de télévision par câble qui transporte ladite programmation, indiquée par l'utilisateur sur le dispositif de commande, et, en conséquence, quel est le canal de télévision par câble qui constitue le premier canal de télévision par câble,
**caractérisé en ce que** :
d) l'agencement de circuits de commande (201 à 206) est conçu pour déterminer une fréquence inutilisée, située soit dans un canal câblé inutilisé, soit juste au-dessus du dernier canal câblé utilisé, afin de l'utiliser comme second canal de télévision par câble (102).

2. Appareil selon la revendication 1, dans lequel le moniteur est un poste de télévision (110, 114) ou un moniteur d'ordinateur (116).

3. Appareil selon la revendication 1 ou la revendication 2, dans lequel le premier canal de télévision par câble (101) est analogique ou numérique.

4. Appareil selon l'une quelconque des revendications 1 à 3, dans lequel le décodeur et le remodulateur (107, 111) :
a) font partie d'un noeud de voisinage (105) ; ou
b) font partie d'un réseau domestique (112) ; ou
c) font partie d'un boîtier de décodage (115) ; ou
d) sont implantés dans la tête de réseau câblé (103).

5. Appareil selon l'une quelconque des revendications 1 à 3, dans lequel le remodulateur est conçu pour alimenter un modem câble (115).

6. Processus destiné à fournir la programmation à un moniteur d'utilisateur, comprenant les étapes consistant à :
a) extraire des informations numériques superposées à la porteuse d'un signal de télévision sur un premier canal de télévision par câble ;
b) moduler lesdites informations numériques extraites sur un second canal de télévision par câble, sous la forme de programmation, le second canal étant disponible pour fournir ladite programmation audit moniteur ; et
c) recevoir un signal d'un utilisateur ;
**caractérisé par** l'étape consistant à :
d) après réception d'un signal correspondant à la désignation, par l'utilisateur, de ladite programmation, déterminer :
(i) quel est le canal de télévision par câble qui transporte ladite programmation et, en conséquence, quel est le canal de télévision par câble qui constitue le premier canal de télévision par câble, et
(ii) localiser une fréquence inutilisée, située soit dans un canal câblé inutilisé, soit juste au-dessus du dernier canal câblé utilisé, afin de l'utiliser comme second canal de télévision par câble.

7. Processus selon la revendication 6, dans lequel :
a) le signal de télévision comprend un signal lié à un signal visuel et une porteuse visuelle ;
b) le signal contenant la programmation est modulé sur la porteuse visuelle, substantiellement en quadrature par rapport à la porteuse visuelle ;
c) la porteuse visuelle sur laquelle a été modulée la programmation est injectée à une infrastructure de télévision par câble ; et
d) le signal de télévision est transporté vers une pluralité de dispositifs qui sont conçus pour extraire la programmation du signal de télévision.

8. Processus selon la revendication 6 ou la revendication 7, dans lequel lesdits signaux de commande reçus entraînent le stockage d'au moins une partie de ladite programmation et/ou la modification d'au moins une partie de ladite programmation.

9. Processus selon la revendication 8, dans lequel l'étape de modulation du signal contenant la programmation comprend la modulation d'un signal contenant de la programmation, qui a été stockée et/ou modifiée en fonction des signaux de commande provenant du dispositif de l'utilisateur.

10. Appareil selon l'une quelconque des revendications 1 à 5, comprenant :
a) une source (102) de programmation (102a) qui alimente un contrôleur de tête de réseau (102) ;
b) une source (101a) qui fournit le signal de télévision à un processeur de tête de réseau (101) sur ledit premier canal de télévision (101) fourni par un système câblé (104) ;
c) un combinateur de tête de réseau (103) destiné à superposer la programmation, sous la forme d'informations numériques, sur la porteuse dudit signal de télévision du premier canal de télévision ;
d) une infrastructure de télévision par câble (104, 105), connectée opérationnellement au contrôleur de tête de réseau et au processeur de tête de réseau et conçu pour transporter le signal de télévision contenant la programmation vers une pluralité de dispositifs décodeurs (106, 109, 112) conçus pour extraire les informations numériques superposées à ladite porteuse ;
f) un modulateur destiné à moduler les informations numériques extraites sur un second canal de télévision par câble (102), sous la forme de programmation ; et
g) un agencement de circuits de commande (201 à 206), couplé au décodeur et conçu pour recevoir des signaux (202a, 212a) provenant d'un dispositif de commande actionné par l'utilisateur.

11. Appareil selon la revendication 10, dans lequel :
a) le signal de télévision comprend un signal lié à un signal visuel et une porteuse visuelle ; et
b) le signal de télévision contenant la programmation est substantiellement en quadrature par rapport à la porteuse visuelle.

12. Appareil selon la revendication 11, dans lequel le modulateur est conçu pour moduler la programmation sur la porteuse visuelle.

13. Appareil selon l'une quelconque des revendications 10 à 12, dans lequel la programmation est une programmation interactive ou une programmation de télévision.

14. Appareil selon l'une quelconque des revendications 10 à 13, dans lequel le système est conçu pour modifier l'heure de livraison et d'affichage de et/ou du contenu de ladite programmation (102a).

15. Appareil selon l'une quelconque des revendications 10 à 14, dans lequel ladite modification de la livraison et de l'affichage comprend le stockage d'au moins une partie de ladite programmation (102a).
